Europäisches Patentamt

European Patent Office

Office européen des brevets

(19)

(11) Veröffentlichungsnummer: **0 056 245**
**A2**

(12) **EUROPÄISCHE PATENTANMELDUNG**

(21) Anmeldenummer: **82100052.8**

(22) Anmeldetag: **07.01.82**

(51) Int. Cl.³: **B 29 C 17/03**

(30) Priorität: **13.01.81 DE 3100806**

(43) Veröffentlichungstag der Anmeldung: **21.07.82**
Patentblatt **82/29**

(84) Benannte Vertragsstaaten: **AT BE CH DE FR GB IT LI LU NL SE**

(71) Anmelder: **Thiel, Erika, Uferstrasse 15, D-6500 Mainz (DE)**

(72) Erfinder: **Thiel, Alfons W., Verstorben (DE)**

(74) Vertreter: **Seids, Heinrich, Dipl.-Phys., Bierstadter Höhe 15 Postfach 5105, D-6200 Wiesbaden (DE)**

(54) Vorrichtung zum Recken einer Materialbahn in kontinuierlichem Durchlauf und schrittweisen Übergeben an eine Behandlungsvorrichtung.

(57) Die Erfindung ist eine verbesserte Vorrichtung zum Recken einer Materialbahn in kontinuierlichem Durchlauf und schrittweisen Übergeben an eine Behandlungsvorrichtung. Sie befasst sich mit dem Problem, dass unmittelbar anschliessend an das Recken von Materialbahnen, insbesondere Bahnen aus thermoplastischem Kunststoff, ein vom jeweiligen Material, der jeweils an der Materialbahn herrschenden Temperatur und der Zeitdauer abhängiger Verlust an Reckwirkung (Relaxation) eintritt. Diese Relaxation wird erfindungsgemäss dadurch wesentlich vermindert, dass die Reckvorrichtung in eine in Förderrichtung der Bahn hin- und herbewegte Transportvorrichtungseinheit (21) einbezogen ist, wobei der Bahnvorschub innerhalb der Transportvorrichtungseinheit (21) und damit der Reckvorgang kontinuierlich ist und trotzdem die Transportvorrichtungseinheit aufgrund ihrer Hin- und Herbewegung die Materialbahn schrittweise in die Weiterbehandlungsvorrichtung, beispielsweise eine Thermoformvorrichtung (TH), eingibt. Eine wesentliche Verbesserung zur Anpassung an die schrittweise Weiterbehandlung wird erreicht, wenn im Bereich der Transportvorrichtungseinheit (21) zwischen dem letzten Reckabschnitt und der Weiterbehandlungsvorrichtung Einrichtungen (70, 80) für die Oberflächentemperierung der Materialbahn eingesetzt sind, mit denen die Oberflächentemperatur, also die Weiterbearbeitungs-Voraussetzungen, jeweils auf die Länge eines Vorschubschrittes vergleichmässigt werden.

0056245

Erika Thiel
Uferstraße 15
6500 Mainz

Vorrichtung zum Recken einer Materialbahn in kontinuierlichem Durchlauf und schrittweisen Übergeben
an eine Behandlungsvorrichtung

Die Erfindung bezieht sich auf eine Vorrichtung zum Recken einer Materialbahn in kontinuierlichem Durchlauf und schrittweisen Übergeben der unter Zuspannung in Längsrichtung und bzw. oder Querrichtung zu haltenden gereckten Materialbahn an eine Behandlungsvorrichtung, beispielsweise zur Herstellung dünnwandiger Formlinge aus einer kontinuierlich in eine Extrudervorrichtung erzeugten thermoplastischen Kunststoffbahn, die nach dem Recken schrittweise in eine Thermoformvorrichtung einzuführen ist, wobei eine Umsetzvorrichtung von kontinuierlichem Bahntransport auf schrittweisen Bahntransport und ein Vorschub-Kondensator vorgesehen sind.

Eine Vorrichtung der oben beschriebenen Art ist aus DE-OS 28 32 385 bekannt. Bei dieser Vorrichtung wird eine Bahn aus thermoplastischem Kunststoff zum biaxialen Recken durch eine mit seitlichen Bogenzahnketten zum Halten der seitlichen Bahnränder ausgestattete Reckvorrichtung geführt. Die seitlichen Bogenzahnketten erstrecken sich über den Ausgang der Reckvorrichtung hinaus in einen Vorschub-Kompensator, der dazu dient, den bis dahin kontinuierlichen Vorschub der Kunststoffbahn in einen der Arbeitsweise der sich anschließenden Behandlungsvorrichtung, insbesondere Thermoformvorrichtung angepaßten schrittweisen Vorschub umzusetzen. Dieser Vorschub- Kompensator enthält einen rechtwinklig zu Fläche und Vorschubrichtung der Kunststoffbahn hin und her bewegten, mit Umlenk- und Führungsrollen für die Bogenzahnketten ausgestatteten Kondensatorrahmen. Abgesehen davon, daß dieser Vorschub-Kompensator erhebliche bewegte Massen beinhaltet und ein mehrfaches Umlenken der Bogenzahnketten notwendig macht, verursacht dieser Vorschub-Kompensator, daß der Weg von Beendigung des Reckvorganges bis zum eigentlichen Formen

- 2 -

und Einfrieren der gereckten Kunststoffbahn sehr lang ist. Man muß für den Weg der gereckten Kunststoffbahn durch den Vorschubkondensator etwa fünf Formlängen und damit bei normaler Arbeitsgeschwindigkeit einer Thermoformvorrichtung eine Durchlaufzeit von 10 bis 15 Sekunden ansetzen.

Genaues Studium der Grundsätzlichkeiten beim Recken von Kunststoffbahnen zeigt, daß der Reck-Effekt, der dem Rückstellvermögen des gereckten Kunststoffes unter Wärmeeinwirkung entspricht und in der Literatur zuweilen auch als "plastisches Gedächtnis" bezeichnet wird, vom Zeitpunkt der Beendigung des Reckvorganges bis zum Einfrieren, also Abkühlen und Verfestigen des gereckten Kunststoffes in Abhängigkeit von der Temperatur des Kunststoffes mehr oder weniger an Effektivität verliert (Relaxation), und zwar bei Aufrechterhaltung der Zugspannung an der Kunststoffbahn und nicht etwa durch Schrumpfen.

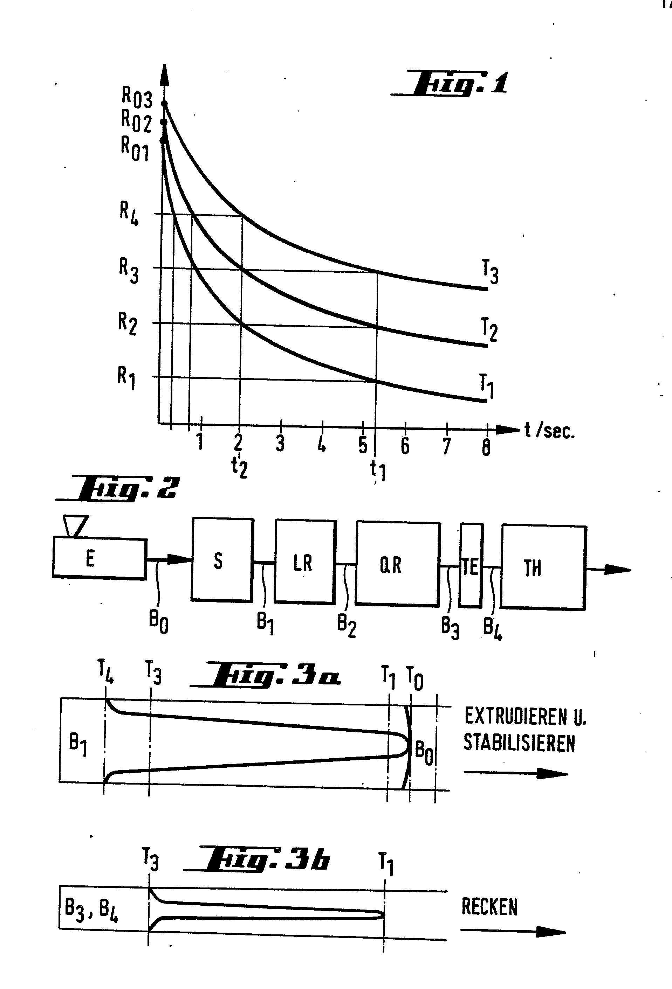

Zur Erläuterung dieser Zusammenhänge sind im Diagramm der Figur 1 drei Kurven für die zeitliche Abnahme des Reckeffektes und der Aufrechterhaltung der Zugspannung an der Kunststoffbahn bei verschiedenen Temperaturen wiedergegeben, und zwar einer hohen, d.h. nahe dem Plastifizierungs-Temperaturbereich des Kunststoffes liegenden Temperatur $T_1$, einer mittleren Temperatur $T_2$ und einer tieferen, d.h. nahe dem Verfestigungs-Temperaturbereich des Kunststoffes liegenden Temperatur $T_3$. Abgesehen davon, daß der bei höherer Temperatur des Kunststoffes erreichbare Reckeffekt beträchtlich geringer ist als der bei tieferer Temperatur erreichbare Reckeffekt, ist auch die Abnahme des Reckeffektes, also die Relaxation bei höherer Temperatur des Kunststoffes wesentlich stärker als bei geringerer Temperatur. So zeigt die Kurve für die höhere Temperatur $T_1$ beispielsweise, daß der Reckeffekt in einer Sekunde auf etwa die Hälfte und nach etwa 2 Sekunden auf ungefähr 30% des Ausgangswertes zurückgeht. Bei mittleren und kühleren Temperaturen ist dieses "Vergessen" des Reckeffektes (Relaxation) noch immer gravierend.

Es kommt andererseits hinzu, daß das Recken von Kunststoffband bei mittleren und kühlen Temperaturen naturgemäß erheblich höheren Kraftaufwand erfordert. Außerdem ist es für die unmittelbare Weiterverarbeitung des Kunststoffbandes, insbesondere bei anschließendem Thermoformen notwendig, eine ausreichende Formbarkeit des Kunststoffes zu gewährleisten, also auch aus diesem Grund relativ hohe Temperaturen am Kunststoffband zu erhalten.

Insgesamt ergibt somit das Studium der Grundsätzlichkeiten beim Recken, daß die bei einer Vorrichtung gemäß DE-OS 28 32 385 zwischen Beendigung des Reckvorganges und dem Abkühlen und Einfrieren des Reckzustandes in das Kunststoffband bzw. die Wandung der in ihm gebildeten Formlinge benötigte Zeit für das Umsetzen des kontinuierlichen Vorschubes in schrittweisen Vorschub erhebliche Verluste an Reckeffekt im Kunststoffband verursacht. Von daher empfiehlt sich der Einsatz einer aus DE-OS 28 32 385 bekannten Vorrichtung nur bei der Verarbeitung solcher Materialien bzw. Kunststoffe, die nicht stark zum Verlust an Reckeffekt bei höheren Temperaturen neigen.

Es ist daher Aufgabe der Erfindung, eine Vorrichtung der eingangs beschriebenen Art dahin wesentlich zu verbessern, daß die zwischen Beendigung des Reckvorganges und Einfrieren des Reckzustandes in die Kunststoffbahn bzw. die Wandung von in ihr gebildeten Formlingen die Zeitspanne wesentlich herabgesetzt wird, daß ferner die Transportlänge, während deren die Zugspannung der Materialbahn aufrecht erhalten werden muß, wesentlich abgekürzt wird, der maschinelle Aufwand der Vorrichtung wesentlich verringert wird und auch der Energiebedarf für den Antrieb der Vorrichtung wesentlich verkleinert und die Betriebssicherheit beträchtlich erhöht wird.

Zur Lösung dieser Aufgabe weist die erfindungsgemäße Vorrichtung die folgenden Merkmale auf:

a) die Umsetzvorrichtung enthält eine als Vorrichtung zum Recken der Materialbahn unter kontinuierlichem Vorschub in Transportrichtung und Halten der gereckten Materialbahn unter Zugspannung ausgebildete Transportvorrichtungseinheit;

b) es sind Einrichtungen zum Erzeugen einer Hin- und Herbewegung dieser Transportvorrichtungseinheit in Transportrichtung vorgesehen, bei denen der Rückwärtsabschnitt der Hin- und Herbewegung auf den wesentlichen Teil seiner Länge mit seiner Geschwindigkeit derjenigen des kontinuierlichen Bahnvorschubs im Inneren der Transportvorrichtungseinheit angeglichen ist;

c) derjenige Teil des Rückwärtsabschnittes der Hin- und Herbewegung, in welchem gleichmäßige Bewegung der Transportvorrichtungseinheit mit gleicher Geschwindigkeit wie die Vorschubgeschwindigkeit herrscht, ist im wesentlichen ebenso lang wie ein Arbeitsschritt der Behandlungsvorrichtung; und

d) der Vorschub-Kompensator ist in Art eines Bahnlängen-Akkumulators ausgebildet und in Wanderrichtung der Materialbahn vor dem Einlaß in die Transportvorrichtungseinheit angeordnet.

Durch die Verlegung des Vorschub-Kompensators vor den Einlaß in die Transportvorrichtungseinheit und damit auch in Wanderrichtung des Materialbandes vor die Reckvorrichtung kann die Weiterbehandlungsvorrichtung für das Materialband unmittelbar hinter dem Auslaß aus der Reckvorrichtung angeschlossen werden. Durch die Hin- und Herbewegung der Transportvorrichtungseinheit läßt sich mit gegenüber der Vorrichtung gemäß DE-OS 28 32 385 wesentlich verringertem technischem Aufwand ein schrittweiser Vorschub des Materialbandes gegenüber einer ortsfesten Weiterbehandlungsvorrichtung erzielen, während die Materialbahn die Transportvorrichtungseinheit und damit die in ihr enthaltene Reckvorrichtung mit konstantem Vorschub durchläuft.

Obwohl die Transportvorrichtungseinheit in Transportrichtung der Materialbahn hin und her bewegt wird, kann man sie durch den Bereich der ortsfesten, schrittweise arbeitenden Behandlungsvorrichtung erstrecken, weil durch die Geschwindigkeitsanpassung der Materialbahn im Inneren der Transportvorrichtungseinheit gegenüber der Rückwärtsbewegung der Transportvorrichtungseinheit ein zeitweiliger Stillstand der Materialbahn gegenüber der ortsfesten Behandlungsvorrichtung eintritt, der ausreicht, um die schrittweise Behandlung der Materialbahn in der Behandlungsvorrichtung zu gewährleisten.

Die Transportvorrichtungseinheit kann wie bekannte Reckvorrichtungen für die Aufrechterhaltung einer Längsspannung und die Erzeugung und Aufrechterhaltung einer Querspannung in der Materialbahn seitliche kontinuierlich umlaufende Transportketten mit Halteelementen für die seitlichen Randbereiche der Materialbahn enthalten.

In bevorzugter Ausführungsform der Erfindung ist die Transportvorrichtungseinheit als Vorrichtung zum biaxialen Recken des Materialbandes in ihrem Einlaßbereich mit einem mit unterschiedlich schnell angetriebenen Vorschubwalzen ausgestatteten Längsreckabschnitt, einem sich daran anschließenden, mit einem Paar von sich seitlich voneinander entfernenden Transportketten ausgestatteten Querreckabschnitt und einem sich durch den Bereich der Behandlungsvorrichtung bzw. Thermoformvorrichtung erstreckenden Halteabschnitt ausgebildet, der parallel angeordnete, seitliche Transportketten aufweist. In dieser Ausführungsform und überhaupt bei Ausstattung der Transportvorrichtungseinheit mit einem Querreckabschnitt und einem sich daran anschließenden Halteabschnitt können sich die seitlichen Transporteinrichtungen, insbesondere Transportketten der Transportvorrichtungseinheit über diese beiden Abschnitte ununterbrochen durchgehend erstrecken.

Bedingt durch den kontinuierlichen Ablauf des Reckvorganges und die schrittweise Weiterbehandlung der gereckten Materialbahn wird jeder Bahnabschnitt, der in einem Schritt der Behandlungsvorrichtung übergeben wird, in dem in Vorschubrichtung vorderen Bereich ausgehend von Beendigung des Reckvorganges "älter" sein als im in Vorschubrichtung hinteren Bereich. Es ist deshalb im Hinblick auf die oben in Verbindung mit Figur 1 gegebenen Erläuterungen damit zu rechnen, daß im vorderen Bereich eines solchen Bahnabschnittes bereits stärkere Relaxation eingetreten ist als im rückwärtigen Bahnabschnitt. Dies tritt um so mehr in Erscheinung, als durch die erfindungsgemäße Vorrichtung der Zeitabschnitt zwischen Beendigung des Reckvorganges und Übergabe an die Behandlungsvorrichtung so stark verkürzt wird, daß die zeitliche Relaxation noch stark in Erscheinung tritt (linker steiler Teil der Relaxationskurven in Fig. 1). Man kann diesen Unterschied im Reckzustand innerhalb eines einem Vorschubschritt entsprechenden Bahnabschnittes in Weiterbildung und Verbesserung der Erfindung dadurch beseitigen oder zumindest wesentlich herabsetzen, daß man jeden solchen Bahnabschnitt einer auf seine Länge veränderten Temperierbehandlung unterwirft, indem man entweder den in Wanderrichtung vorderen Teil eines solchen Bahnabschnittes sofort nach dem Reckvorgang durch Oberflächen-Abkühlung zur Verlangsamung der zeitlichen Relaxation veranlaßt (Übergang von beispielsweise Kurve $T_1$ auf Kurve $T_2$ oder Kurve $T_3$ in

Figur 1). Eine andere Möglichkeit besteht darin, daß man eine stärkere Relaxation von vornherein in Betracht zieht und deshalb jeden Materialbahnabschnitt einer solchen Nachtemperierung unterwirft, bei der der in Wanderrichtung rückwärtige Bereich durch Oberflächenaufwärmung zu stärkerer Relaxation veranlaßt wird (Übergang von Kurve $T_3$ auf Kurve $T_2$ oder Kurve $T_1$ der Figur 1). Um diesen Ausgleich auszuführen, kann bei der erfindungsgemäßen Vorrichtung im Bereich der Transportvorrichtungseinheit und zwar in Wanderrichtung des Materialbandes hinter der Reckvorrichtung mindestens eine auf die Oberflächen des Materialbandes gerichtete Oberflächen-Temperiereinrichtung vorgesehen sein.

Diese Oberflächentemperiereinrichtung kann an der Transportvorrichtungseinheit angebracht sein, insbesondere kann eine solche Oberflächentemperiereinrichtung am Übergang zwischen dem Querreckabschnitt und dem Halteabschnitt der Transportvorrichtungseinheit angebracht sein. Es ist aber auch möglich, eine solche Oberflächentemperiereinrichtung am Einlaß der stationären Behandlungsvorrichtung anzubringen.

Eine solche Oberflächentemperiereinrichtung kann beispielsweise mindestens eine oberhalb und bzw. oder unterhalb der Führungsebene für das Materialband angeordnete und sich quer zur Wanderrichtung des Materialbandes über die gesamte Breite der Transportvorrichtungseinheit erstreckende Reihe von auf die jeweilige Oberfläche des Materialbandes gerichteten Strahldüsen für fließfähiges Temperiermedium enthalten. Solche Strahldüsen können für dampf- oder gasförmige Temperiermedien eingerichtet sein. Es ist aber auch möglich, Strahldüsen für flüssige Temperiermedien, beispielsweise Wasser, vorzusehen. Mit solchen Strahldüsen sind dann jedoch feine Nebel von Flüssigkeit, insbesondere verdampfungsfähiger Flüssigkeit zu erzeugen und auf die heißen Oberflächen des Materialbandes zu führen, so daß sie dort sofort verdampfen, ohne diese Oberflächen zu befeuchten. Der Kühleffekt wird deshalb hauptsächlich durch den Verdampfungsvorgang hervorgerufen. Um einen solchen sehr feinen Nebel zu erzeugen und auf die Oberflächen des Materialbandes zu führen, kann man Aerosolerzeuger, insbesondere Ultraschallvernebler vorsehen und Aerosol-Verteilerdüsen als Strahldüsen benutzen. Die Zuführung eines Aerosols als Kühlmedium läßt ein besonders gut steuerbares und hoch wirksames Temperieren der Oberflächen des soeben gereckten Materialbandes zu.

Die Zuführung für das Temperiermedium ist vorzugsweise über mindestens eine zeitlich gesteuerte Mengenventilanordnung zu führen. Dabei kann die zeitliche Steuerung so eingerichtet sein, daß entsprechend dem Takt des schrittweisen Vorschubs während eines Vorschubschrittes ausgehend von Schließstellung bis zu einer gewünschten, vorzugsweise einstellbaren Maximalmenge Kühlmedium auf die Oberflächen des Materialbandes geführt wird. Es ist aber auch denkbar, eine solche zeitliche Steuerung der Mengenventilanordnung vorzusehen, daß während eines Vorschubschrittes ausgehend von einer gewünschten, vorzugsweise einstellbaren Maximalmenge die auf die Oberflächen des Materialbandes geführte Menge an Temperiermedium verringert wird bis hin zum vollständigen Schließen der Mengenventilanordnung.

Der in Wanderrichtung des Materialbandes vor der Transportvorrichtungseinheit angeordnete Bahnlängen-Akkumulator kann ein ortsfestes Bahnführungselement, vorzugsweise eine Bandführungswalze und ein am Einlaß der hin und her bewegten Transportvorrichtungseinheit angebrachtes Bahnführungselement, vorzugsweise Bahnführungswalze aufweisen. Weniger empfindliche Materialbahnen können zwischen diesen beiden Bahnführungselementen schlaufenartig durchhängen. Für empfindlichere Materialbahnen wird man den Bahnlängen-Akkumulator in der Weise ausbilden, daß zwischen dem ortsfesten Bahnführungselement und dem am Einlaß der hin und her bewegten Transportvorrichtungseinheit angebrachten Bahnführungselement eine Mehrzahl weiterer Bahnführungselemente auf schlaufenförmig zusammenschiebbaren und ausstreckbaren Trägerelementen angebracht ist. Diese Trägerelemente können als ein Paar von im wesentlichen mittig scherenartig gelenkig miteinander verbundenen Trägerrahmen ausgebildet sein, wobei eine Bahnführungswalze in der Scherengelenkachse angeordnet sein kann.

Die an der Transportvorrichtungseinheit angebrachten Transportketten können bevorzugt als in Führungsschienen laufende Doppelrollenketten ausgebildet sein, die auf einer Seite die Halteelemente für die Ränder der Materialbahn tragen. Solche in Führungsschienen laufende Doppelrollenketten bieten hohe Führungssicherheit und Führungsgenauigkeit bei relativ geringem Kraftbedarf für den Antrieb. Um das Materialband mit seinen Rändern auch bei schnellem Durchlauf durch die Transportvorrichtungseinheit sicher auf den Halteelementen der Transportketten festzuhalten, ist es zweckmäßig, die Transportvorrichtungseinheit mit Einrichtungen zur Übergabe und zum Festlegen der Materialbänderränder an die bzw. den Halteelementen zu versehen und am Auslaß der Transportvorrichtungseinheit Einrichtungen zum Abheben der Materialbahnränder von den Halteelementen der Transportketten anzuordnen. Für die Ausbildung der Halteelemente der Transportketten kommen die verschiedensten Möglichkeiten in Betracht, beispielsweise Halte-Spitzdorne oder auch Klemmhalte-Elemente mit sich nach oben im wesentlichen V-förmig erweiternder und oben offener Aufnahmeöffnung.

Ausführungsbeispiele der Erfindung werden im folgenden anhand der Zeichnung erläutert. Es zeigen:

- 10 -

0056245

| | | |
|---|---|---|
| Figur 1 | | ein zeitliches Relaxations-Diagramm für biaxial gerecktes Polystyrolband bei verschiedenen Materialtemperaturen; |
| Figur 2 | | ein Vorrichtungsdiagramm für die Herstellung von Kunststoffartikeln durch Thermoformen in einem unmittelbar vorher extrudierten und zwischenzeitlich biaxial gerecktem Kunststoffband; |
| Figur 3a | | das Temperaturprofil eines Kunststoffbandes vor dem Recken in einer Vorrichtung gemäß Figur 2 |
| Figur 3b | | das Temperaturprofil des Kunststoffbandes nach dem Recken; |
| Figur 4a | | eine schaubildliche Darstellung einer erfindungsgemäßen Vorrichtung in Seitenansicht in der einen Endstellung ihrer Transportvorrichtungseinheit; |
| Figur 4b | | die Vorrichtung gemäß Figur 4a in der anderen Endstellung ihrer Transportvorrichtungseinheit; |
| Figur 5 | | eine perspektivische Darstellung der Transportvorrichtungseinheit einer Vorrichtung gemäß Figur 4a und Figur 4b; |
| Figur 6 | | ein Abschnitt einer Doppelrollenkette mit Halteelementen für die Transportvorrichtungseinheit; |
| Figur 7 | | einen Vertikalschnitt durch eine seitliche Kettenführung mit eingelegter Doppelrollenkette an der Transportvorrichtungseinheit; |
| Figur 8 | | einen Abschnitt der Doppelrollenkette in Seitenansicht mit abgewandelten Halteelementen; |

Figur 9          einen Teilschnitt nach der Linie
                 9-9 der Figur 8;

Figur 10         einen Teilschnitt nach der Linie
                 10-10 der Figur 8;

Figur 11a        die schematische seitliche Ansicht
                 einer abgewandelten Ausführung des
                 Bahnlängen-Akkumulators in gebeug-
                 ter Stellung;

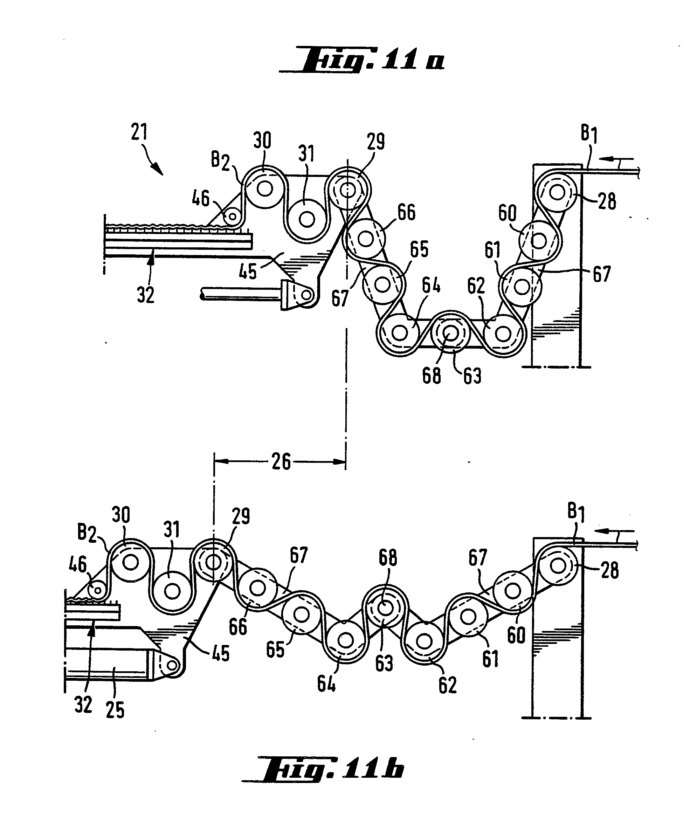

Figur 11b        die schematische seitliche Ansicht
                 des Bahnlängen-Akkumulators gemäß
                 Figur 11a in gestreckter Stellung;

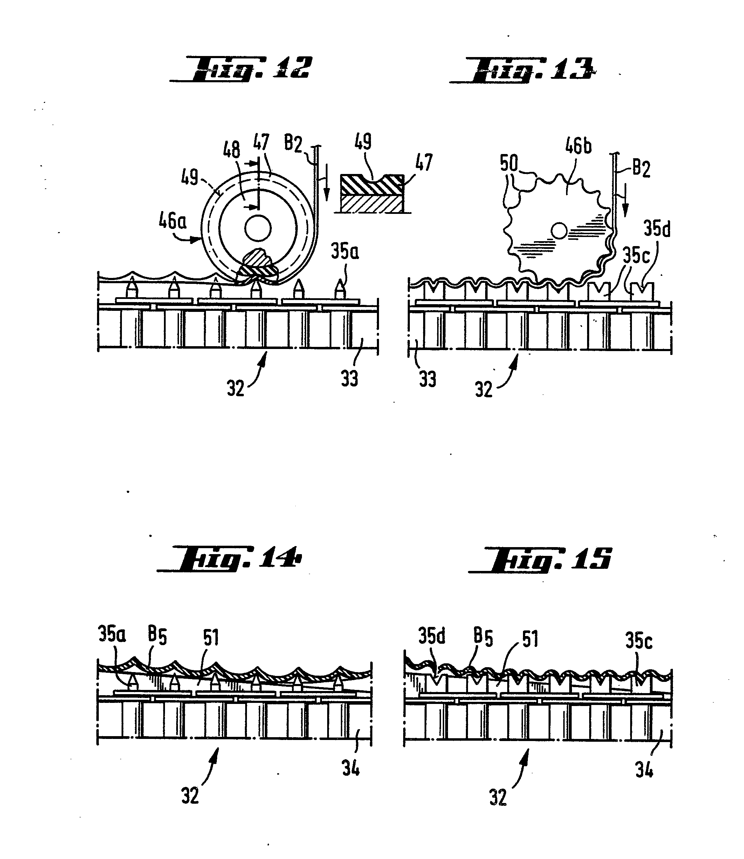

Figur 12         eine Einrichtung zum Aufgeben der Ma-
                 terialbahnränder auf die Halteele-
                 mente der Transportketten in der
                 Transportvorrichtungseinheit;

Figur 13         eine ähnliche, auf die abgewandelte Hal-
                 teelemente abgestimmte Aufgabevorrich-
                 tung, wie diejenige nach Figur 12 in
                 entsprechender Darstellungsweise;

Figur 14         eine Einrichtung zum Abheben der Ma-
                 terialbahnränder von den Halteelemen-
                 ten der Transportketten am Auslaß
                 der Transportvorrichtungseinheit;

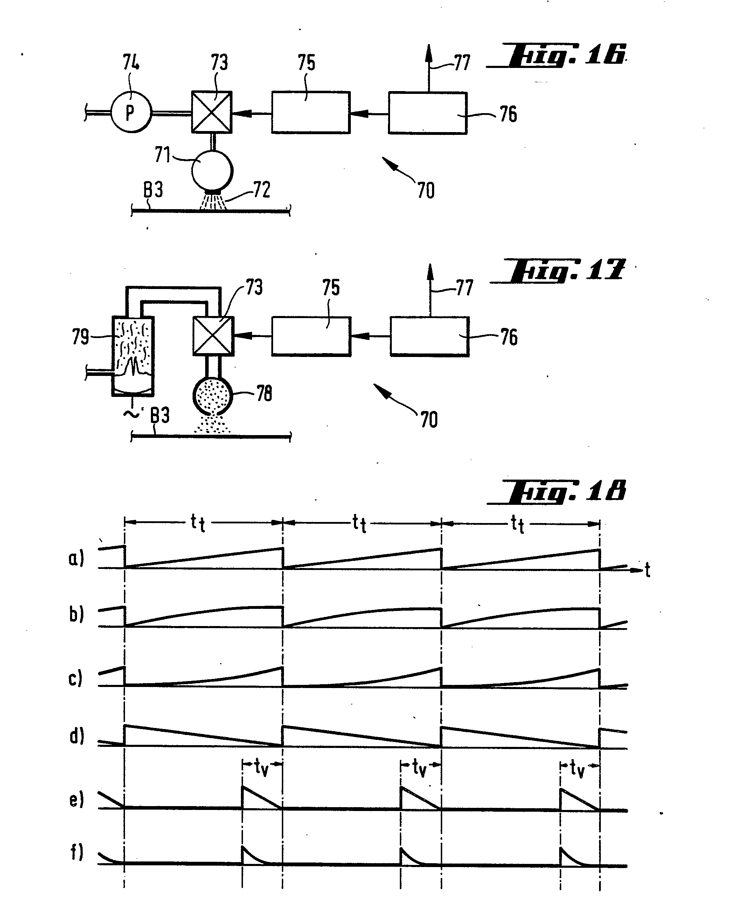

Figur 15    eine ähnliche Abhebevorrichtung wie
diejenige  nach Figur 14, jedoch in
Verbindung mit abgewandelten Halteelementen;

Figur 16    das Schema einer zum Aufsprühen von
Flüssigkeit ausgebildeten, im Bereich
der Transportvorrichtungseinheit angeordneten Oberflächen-Temperiereinrichtung;

Figur 17    das Schema einer zum Aufbringen eines
Aerosols ausgebildeten, im Bereich der
Transportvorrichtungseinheit angeordneten Oberflächen-Temperiereinrichtung;
und

Figur 18    einige zeitliche Steuerfunktionen für
die Oberflächen-Temperiereinrichtung.

Figur 1 verdeutlicht am Beispiel von biaxial gereckten Polystyrolbahnen die Erscheinung, daß die an einer Materialbahn
aus thermoplastischem Kunststoff vorgenommene Reckung in
ihrer Effektivität auch dann nachläßt, wenn die Materialbahn
in Längsrichtung und Querrichtung unter Spannung gehalten
wird, also weder in Querrichtung noch in Längsrichtung einschrumpfen kann. Diese im folgenden als Relaxation bezeichnete Erscheinung ist ebenso wie der maximal erreichbare Reckungsgrad von der an der Materialbahn herrschenden
Temperatur abhängig. Hierzu sind in Figur 1 drei Kurven für
drei verschiedene Temperaturen enthalten. Die unterste Kurve bezieht sich auf eine relativ hohe Temperatur $T_1$, die

nahe am Plastifizierungs-Temperaturbereich des Polystyrol liegt, also bei etwa 180°C. Die mittlere Kurve bezieht sich auf eine mittlere Temperatur $T_2$ der Materialbahn bei etwa 150°C. Schließlich bezieht sich die obere Kurve auf niedrige Temperatur $T_3$ an der Materialbahn, wobei diese Temperatur $T_3$ mit etwa 120°C an der oberen Grenze desjenigen Temperaturbereiches liegt, in welchem die Moleküle im Kunststoff unbeweglich werden, also die geschaffenen Reckungsverhältnisse in den Kunststoff der Materialbahn "eingefroren" werden. Die linken, verstärkt gezeichneten Anfangspunkte der drei Kurven zeigen, daß bei höherer Temperatur die Orientierung der Kunststoffmoleküle in nur in geringerem Ausmaß erreichbar ist als bei niedrigeren Temperaturen, also die erzielbare maximale Reckwirkung ebenfalls von der an der Materialbahn herrschenden Temperatur abhängig ist. Dazu muß allerdings beachtet werden, daß die zum Recken der Materialbahn aufzuwendenden Kräfte um so größer sind, je niedriger die an der Materialbahn herrschende Temperatur ist.

Wie die unterste Kurve in Figur 1 zeigt, ist der zeitliche Verlust an Reckwirkung (Relaxation) recht erheblich. Unter den in dieser untersten Kurve wiedergegebenen Verhältnissen verliert die gereckte Materialbahn innerhalb der ersten Sekunde etwa die Hälfte der ihr gegebenen Reckwirkung. Innerhalb der ersten zwei Sekunden sinkt die Reckwirkung auf etwa 30% der ursprünglichen Reckung ab. Bei mittleren und niedrigen Temperaturen ist der Verlust an Reckwirkung geringer. Jedoch ist diese Relaxation auch in solchen Fällen in ganz beachtlichem Maße vorhanden. Die in Figur 1 beispielhaft eingetragenen Vergleiche zeigen, daß nach einer Zeit $t_1$ von 5,3 Sekunden nach Beendigung des Reckvorganges unter den Verhältnissen der Kurve $T_1$ nur noch ein restlicher Reckeffekt $R_1$ in der Kunststoffbahn besteht, der etwa 15% der Ausgangsreckung $R_{o1}$ beträgt. Es ist also eine Relaxation von 85% eingetreten. Nach der gleichen Zeit $t_1$ verbleibt unter den Verhältnissen der Kurve $T_2$ eine restliche Reckwirkung $R_2$, die bei 35% der entsprechenden Ausgangs-Reckwirkung $R_{o2}$ liegt. Bei mittlerer Temperatur $T_2$ ist somit eine Relaxation um 65% eingetreten. Nach der gleichen Zeitspanne $t_1$ ist unter den Verhältnissen der Kurve für niedrige Temperatur $T_3$ eine restliche Reckwirkung $R_3$ in der Polystyrolbahn enthalten, die bei 50% der entsprechenden Ausgangs-Reckwirkung $R_{o3}$ liegt. Dies entspricht einer Relaxation von 50%, die - wie oben dargelegt - unter den Verhältnissen hoher Temperatur $T_1$ bereits nach Ablauf von 1 Sekunde nach Beendigung des Reckvorganges eingetreten ist.

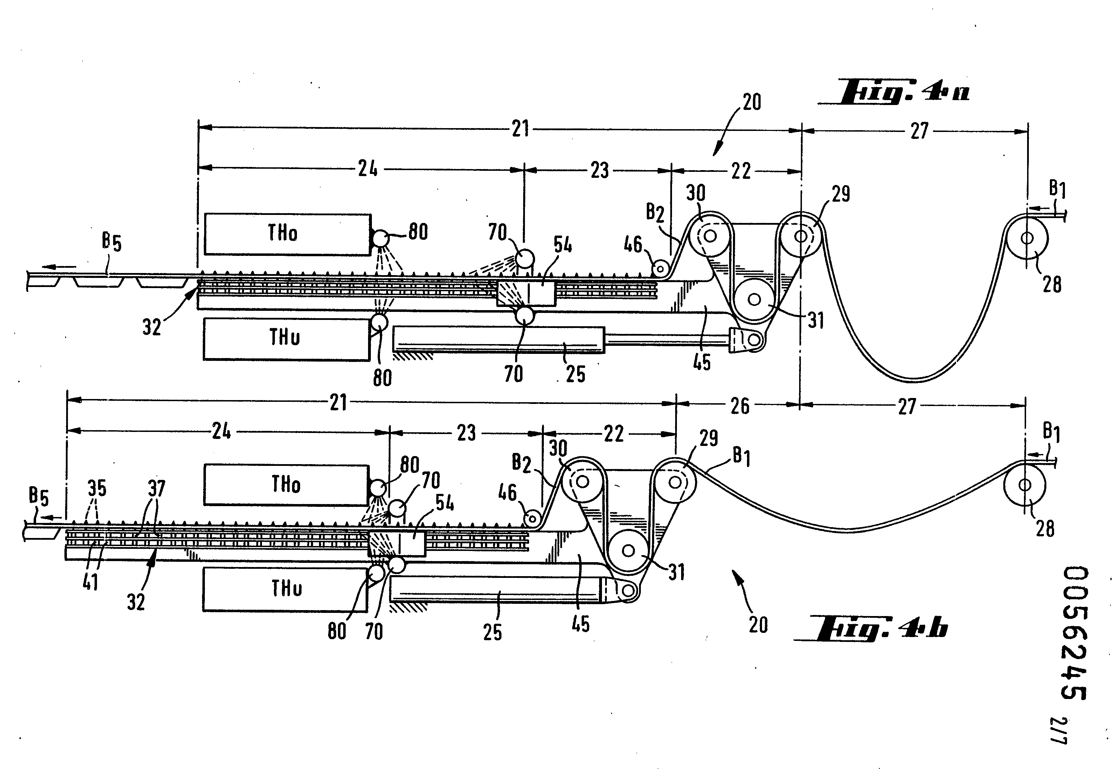

Ein zweiter in Figur 1 eingetragener Vergleich geht von der Überlegung aus, daß für die Herstellung dünnwandiger Massenartikel durch Thermoformen in thermoplastischen Kunststoffbahnen derzeit Produktionslinien gebräuchlich sind, bei denen eine extrudierte Kunststoffbahn anschließend an das Stabilisieren schrittweise einer Thermoformvorrichtung zugeführt wird, die etwa 30 bis 35 Arbeitstakte in der Minute ausführt. Eine solche Produktionslinie ist in Figur 2 schematisch angedeutet. Aus dem Extruder E wird die Materialbahn $B_o$ in eine Stabilisierungsvorrichtung S eingeführt, in der die Oberflächen der Materialbahn so stark abgekühlt werden, daß die Materialbahn stabil weitergeführt werden kann. Diese stabilisierte Materialbahn $B_1$ wird nach evtl. Vortemperieren in eine Längsreckvorrichtung LR übergeführt. Die längsgereckte Materialbahn $B_2$ läuft von dort in eine Querreckvorrichtung QR. Die nunmehr biaxial gereckte Materialbahn $B_3$ durchläuft eine Temperiereinrichtung TE, um als fertig vorbereitete biaxial gereckte Materialbahn $B_4$ in die Thermoformvorrichtung TH zu gelangen. Wenn es gelingt, die Reckvorgänge in der Längsreckvorrichtung LR und der Querreckvorrichtung QR auf die Thermoformvorrichtung TH optimal derart abzustimmen, daß keine Zwischenstation mehr zwischen den Reckvorrichtungen LR und QR und der Thermoformvorrichtung TH erforderlich sind, könnte die Alterungszeit der in der Thermoformvorrichtung TH zwischen Beendigung des Reckvorganges und Beginn des Thermoformvorganges theoretisch auf einen Wert $t_2$ von etwa 2 Sekunden herabgesetzt werden. Unter den Verhältnissen der in Figur 1 für die Temperatur $T_3$ wiedergegebenen Kurve würde dann ein restlicher Reckeffekt $R_4$ bei etwa 64% der Ausgangs-Reckwirkung $R_{o3}$ (Relaxation 35%) erreicht. Dieses Ergebnis könnte man bei hoher Temperatur $T_1$ an der Materialbahn nur durch Herabsenken der Alterungszeit auf etwa 0,3 Sekunden und bei mittlerer Temperatur $T_2$ auf eine Alterungszeit von etwa 0,7 Sekunden erreichen. Diese letzteren Alterungszeiten sind aber im Hinblick auf den oben erwähnten Arbeitstakt der Thermoformvorrichtung technisch grundsätzlich nicht realisierbar. Dagegen läßt sich in einer in Figur 2 grundsätzlich wiedergegebenen Produktionslinie mit der Erfindung erreichen, daß die Alterungszeit der Kunststoffbahn im wesentlichen auf das durch den Arbeitstakt der Thermoformvorrichtung TH bestimmten Minimumswert $t_2$ herabgesetzt wird. Figur 1 läßt aber erkennen, daß diese Herabsetzung der Alterungszeit in den Bereich des durch den Arbeitstakt der Thermoformvorrichtung TH gegebenen Idealwert $t_2$ besondere Bedeutung dann erlangt, wenn die für das Thermoformen vorbereitete Materialbahn $B_4$ auf niedrige Temperatur $T_3$ eingestellt wird. Es wurde im Rahmen der Erfindung erkannt, daß diese Möglichkeit besteht obwohl bei der niedrigen Temperatur $T_3$ der Kunststoff, insbesondere das Polystyrol nicht mehr in für das Thermoformen geeignetem Zustand ist. Figur 3b läßt erkennen, daß trotzdem für das Thermoformen geeignete Verhältnisse geschaffen werden können. Die Materialbahn $B_0$ wird zunächst bei einer hohen Temperatur $T_0$ extrudiert, die auch noch oberhalb von $T_1$ liegt. Beim Durchlaufen der Stabilisiervorrichtung S werden die Oberflächen der Materialbahn erheblich abgekühlt. Die die Stabilisierungsvorrichtung S verlassende Materialbahn $B_1$ hat

beispielsweise Oberflächentemperaturen $T_4$, die merklich unterhalb der in Figur 1 in Betracht gezogenen niedrigen Temperatur $T_3$ liegen. Dagegen hat die Materialbahn $B_1$ in ihrem Kern weitgehend die Extrudiertemperatur $T_0$ beibehalten.

Bei dem sich an das Stabilisieren anschließende zweistufige Recken in der Längsreckvorrichtung LR und der Querreckvorrichtung QR werden die Oberflächenbereiche der Materialbahn durch Wärmeleitung von Innen her und durch die an ihnen ausgeübte Verstreckungsarbeit aufgewärmt, so daß auf diese Weise eine Oberflächentemperatur an der die Querreckvorrichtung verlassenden Materialbahn $B_3$ etwa bei der in Figur 1 in Betracht gezogenen niedrigen Temperatur $T_3$ einstellbar ist. Der Kern der Materialbahn $B_3$ wird dabei etwas abgekühlt werden, etwa auf eine Temperatur $T_1$ oder zwischen $T_1$ und $T_0$.

Das im Kern der biaxial gereckten Kunststoffbahn $B_3$ verbliebene plastifizierte Material bildet somit den nur wenig biaxial gereckten Träger für die stark biaxial gereckten und auf der niedrigen Temperatur $T_3$ gehaltenen Außenschichten. Dies ist für das Produkt, also die Formlinge eher von Vorteil als nachteilig, weil die mit dem biaxialen Recken erzielten Materialverbesserungen für die Außenflächen der Formlingwandung und nicht für den mechanisch neutralen Kernbereich der Wandung von Bedeutung sind.

Aus den Figuren 1 bis 3 ergibt sich als weiterer Vorteil, daß die in der Temperiereinrichtung TE zwischen der Querreckvorrichtung QR und Thermoformvorrichtung TH vorzunehmende Nachtemperierung nicht mehr notwendig sondern nur noch als Ergänzung und Verbesserung empfehlenswert ist, um innerhalb eines gleichzeitigen Thermoformen unterworfenen Bandabschnittes praktisch gleiche Reckverhältnisse einzustellen. Vor allem kann das Nachtemperieren ohne zusätzlichen Zeitbedarf an der Kunststoffbahn $B_3$ vorgenommen werden.

Schließlich kann die in der Zeit $t_2$ in den Oberflächenbereichen der Kunststoffbahn eintretende Relaxation ohne weiteres durch die beim Thermoformen auftretende erneute Reckung wieder aufgehoben werden. Die oben erläuterte grundsätzliche Bearbeitungs- und Behandlungsweise des Kunststoffmaterials wird besonders vorteilhaft mit den in den Figuren 4a bis 18 wiedergegebenen bevorzugten Ausführungsformen der kombinierten Reck- und Vorschubumsetzungsvorrichtung sichergestellt.

Gemäß Fig. 4a und 4b besteht die kombinierte Reck- und Vorschubumsetzvorrichtung 20 aus einer Transportvorrichtungseinheit 21, die in Wanderrichtung der Materialbahn hin und her bewegbar ist und sich durch den Bereich der Thermoformvorrichtung zwischen dem oberen Thermoformwerkzeug THo und dem unteren Thermoformwerkzeug THu hindurch erstreckt. Die Transportvorrichtungseinheit enthält einen die Längsreckvorrichtung LR bildenden Längsreckabschnitt 22, einen die Querreckvorrichtung QR bildenden Querreckabschnitt 23 und einen Halteabschnitt 24, der sich in jeder Stellung der Transportvorrichtungseinheit 21 durch den Bereich der Thermoformvorrichtung erstreckt. Zur Erzeugung der Hin- und Herbewegung der Transportvorrichtungseinheit 21 ist eine Bewegungseinrichtung 25 vorgesehen, die im Beispiel der Figuren 4a und 4b als Zylinder-Kolben-Anordnung dargestellt ist und einen Arbeitshub 26 aufweist, der gleich der durch die Thermoformvorrichtung bestimmten Länge des Vorschubschrittes ist.

In Wanderrichtung der Materialbahn $B_1$ vor der Transportvorrichtungseinheit ist ein Bahnlängen-Akkumulator 27 angeordnet, der im dargestellten Beispiel aus einer stationären Bahnführungswalze 28 und einer am Eingang der Transportvorrichtungseinheit 21 angebrachten Bahnvorschubwalze 29 besteht. Da die stationäre Bahnführungswalze 28 und die Bahnvorschubwalze 29 stets in Abstand sind und dieser Abstand (siehe Fig. 4a und 4b) sich mit der Hin- und Herbewegung der

- -18--

Transportvorrichtungseinheit ändert, kann die Materialbahn $B_1$ zwischen diesen beiden Walzen 28 und 29 schlaufenförmig mehr oder weniger tief durchhängen und auf diese Weise ein ausreichendes Maß an Bahnlänge zur Verfügung stellen, um die Transportvorrichtungseinheit 21 ohne unmittelbaren Einfluß auf die Materialbahn $B_1$ um die Hublänge 26 hin und her bewegen zu können. Im Längsreckabschnitt 22 der Transportvorrichtungseinheit 21 sind außer der die Materialbahn $B_1$ kontinuierlich aus dem Bahnlängen-Akkumulator 27 übernehmenden Bahnvorschubwalzen 29 eine Streckwalze 30 und eine Umlenkwalze 31 angeordnet. Die Streckwalze 30 ist um ein der gewünschten Längsreckung entsprechendes Maß schneller angetrieben als die Bahnvorschubwalze 29. Zum Längsrecken wird die Materialbahn $B_1$ um diese Umlenkwalze 31 in stärkerem Maß herumgezogen als sie von der Bahnvorschubwalze 29 aus dem Bahnlängen-Akkumulator 27 übernommen wird. Die Umlenkwalze 31 dient dabei neben der gleichmäßigen Verteilung der Längsreckwirkung auch zur Sicherstellung, daß die Materialbahn $B_1$ die Bahnvorschubwalze 29 und die Streckwalze 30 ausreichend weit umschlingt. Von dem Längsreckabschnitt 22 wird die längsgereckte Materialbahn $B_1$ an den Querreckabschnitt 23 übergeben. Im Querreckabschnitt 23 und dem sich anschließenden Halteabschnitt 24 ist die Transportvorrichtungseinheit 21 mit seitlichen Rollenketten 32 ausgestattet, die sich durchgehend durch den Querreckabschnitt 23 und den Halteabschnitt 24 erstrecken. Entlang der Seitenränder dieser beiden Abschnitte 23 und 24 verlaufen die Doppelrollenketten 32 innerhalb von Führungsschienen 33 und 34 derart, daß sich die Doppelrollenketten 32 im Querreckabschnitt 23 voneinander entfernen und im Halteabschnitt 24 parallel zueinander verlaufen. Die Doppelrollenketten 32 tragen an ihrer Oberseite Halteelemente 35, auf die die längsgereckte Materialbahn $B_1$ mit ihren seitlichen Rändern aufgesetzt und bis zum Verlassen der Transportvorrichtungseinheit 21 festgehalten wird. Der Querschnitt der Führungsschienen 33 bzw. 34 ist aus Figur 7 ersichtlich. Hiernach enthält diese Führungsschiene ein oberes Führungsleistenpaar 36, das auf die oberen Rollen 37 und zwischen die diese oberen Rollen 37 stirnseitig haltenden Verbindungsglieder 38 und 39 greift. Ferner enthält diese Führungsschiene 33 bzw. 34 ein inneres oder unteres Führungsschienenpaar 40, das auf die unteren Rollen 41 und zwischen die diese unteren Rollen 41 stirnseitig haltenden Verbindungsglieder 42 und 43 greift. Diese Führungsschienen 33, 34 sind mit Schrauben 44 auf den Rahmen 45 der Transportvorrichtungseinheit 21 montiert.

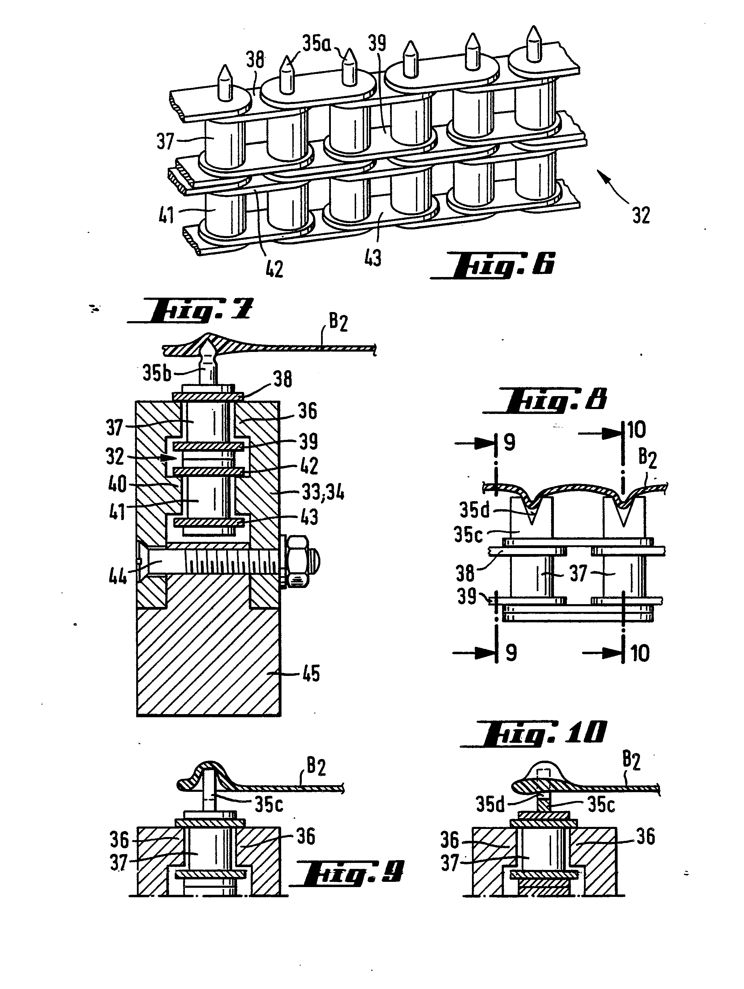

Im Beispiel der Figur 6 sind die Halteelemente der Doppelrollenkette 32 als Spitzdorne 35a oder Nadeln ausgebildet. Figur 7 zeigt als Beispiel Halteelemente 35b, die hinter ihrer Spitze pikenförmig eingezogen sind, um dadurch eine bessere Verankerung der Kunststoffbahn auf der Spitze der Halteelemente 35b zu erzielen. In den Figuren 8 bis 10 sind mehr oder weniger flache plattenförmige Halteelemente 35c vorgesehen, die an ihrer oberen Stirnseite einen nach oben offenen V-förmigen Ausschnitt 35d aufweisen. Die Seitenränder der längsgereckten Kunststoffbahn $B_2$ werden in diese V-förmigen Ausnehmungen 35d und in die Zwischenräume zwischen benachbarten Halteelemente 35c eingedrückt, so daß eine sehr wirksame Verankerung der Ränder der Kunststoffbahn $B_2$ an solchen Halteelementen 35c eintritt.

Möglichkeiten für das wirksame Aufsetzen der längsgereckten Kunststoffbahn $B_1$ auf die Halteelemente 35 der Doppelrollenkette 32 sind aus den Figuren 12 und 13 erkennbar. Gemäß Figur 4 ist am Eingang des Querreckabschnittes 23 ein Paar von Übergabe- und Aufsetzrollen 46 vorgesehen, und zwar je eine Übergabe- und Aufsetzrolle 46 für jede Doppelrollenkette 32. Diese Übergabe- und Aufsetzrollen 46 sind naturgemäß der Art der jeweils benutzten Halteelemente 35 der Doppelrollenketten 32 angepaßt. So zeigt Figur 12 eine Übergabe- und Aufsetzrolle 46a, die besonders in Verbindung mit Halteelementen in Form von Spitzdornen 35a oder auch Piken 35b (Figur 7) geeignet ist. Bei dieser Übergabe- und Aufsetzrolle 46a ist ein Ring 47 aus weichem, nachgiebigem Material, beispielsweise Gummi oder weichem Kunststoff auf einem festen Nabenteil 48 angebracht. Dieser weiche Ring 47 ist im mittleren Bereich seiner Umfangsfläche mit einer Rille 49 ausgebildet, in die die Spitzen der Dorne 35a oder Piken 35b mit dem daraufliegenden Randbereich der Kunststoffbahn $B_2$ greifen. Durch die weiche, nachgiebige Ausbildung des Ringes 47 drückt sich die Spitze der Spitzdorne 35a bzw. Piken 35b mit dem daraufliegenden Kunststoffrand etwas in den Ring 47 ein, so daß der Kunststoff wirksam um die Schlitze des Spitzdornes 35a bzw. der Pike 35b geformt wird.

Im Beispiel der Figur 13 ist eine Übergabe- und Aufsetzrolle 46b vorgesehen, die an ihrem Umfang mit Eindrückrippen 50 ausgebildet ist. Diese Übergabe- und Andrückrolle 46b ist derart synchron mit dem Lauf der Doppelrollenkette 32 angetrieben, daß der Randbereich der längsgereckten Kunststoff-bahn $B_2$ in die V-förmigen Ausnehmungen 35d der plattenförmigen Halteelemente 35c eingedrückt wird. Im speziellen Fall der Figur 13 sind die Eindrückrippen 50 in solchen Abständen angeordnet, daß sie den Rand der Kunststoffbahn $B_2$ zusätzlich noch in die Zwischenräume zwischen den Halteelementen 35c eindrücken.

Auf jeden Fall wird bei Übergabe der längsgereckten Kunst-stoffbahn $B_2$ an den Querreckabschnitt 23 die Verbindung der Bahnränder mit den Halteelementen so fest und sicher vorgenommen, daß die Kunststoffbahn nicht nur während des Querreckens sondern auch während des Thermoformens sicher an den Halteelementen verankert bleibt.

Um die aus der Thermoformvorrichtung kommende, inzwischen weitgehend abgekühlte Kunststoffbahn $B_5$ (vergl. Figur 4a,4b) sicher von den Halteelementen der Doppelrollenketten 32 zu lösen, sind gemäß Figur 14 und Figur 15 keilförmige Rampen 51 auf dem oberen Rand der Führungsschienen 34 angebracht. Diese keilförmigen Rampen 51 erreichen zumindest gleiche Höhe wie die Halteelemente 35. Figur 14 zeigt, wie auf diese Weise die Randbereiche der Kunststoffbahn $B_5$ von den Spitzen der Spitzdorne 35a abgehoben werden. In entsprechender Weise zeigt Figur 15, wie die Randbereiche der Kunststoffbahn $B_5$ aus den V-förmigen Ausnehmungen 35d der Halteelemente 35c herausgehoben werden.

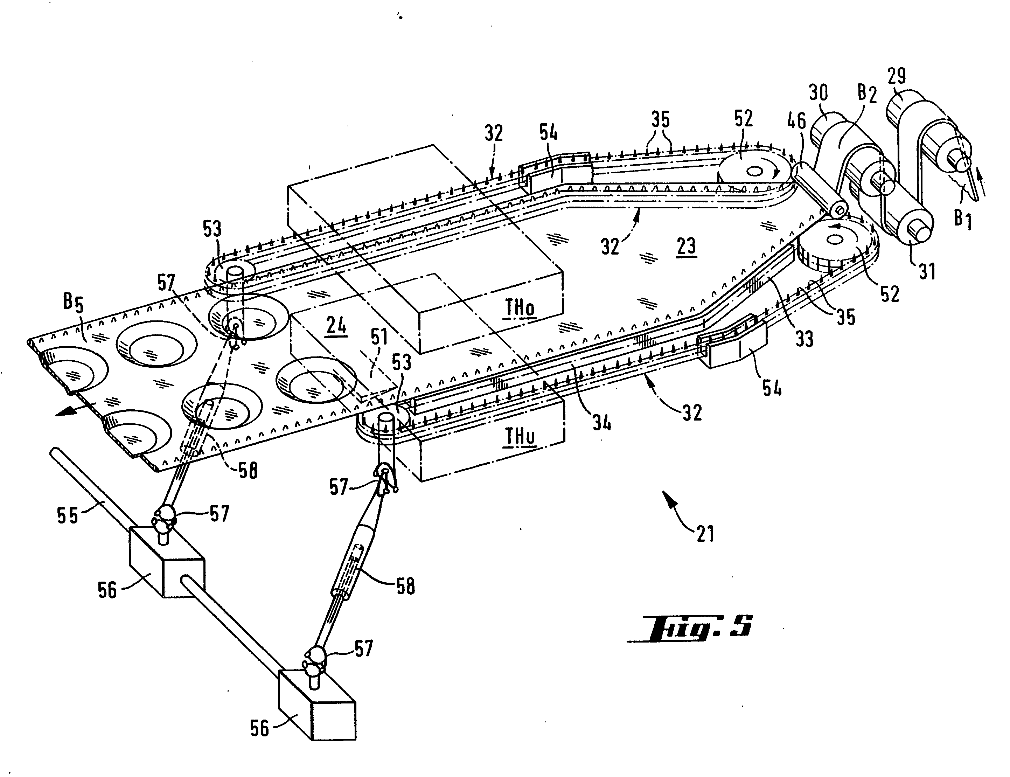

Wie Figur 5 zeigt, sind die Doppelrollenketten 32 am Einlaßbereich des Querreckabschnittes 23 und am Auslaßbereich des Halteabschnittes 24 über als Kettenräder ausgebildete Umlenkrollen 52 und 53 geführt. Der äußere, zurücklaufende Abschnitt der Doppelrollenketten 32 kann - abgesehen von einzelnen Führungsstücken 54 - im wesentlichen frei (innerhalb einer Schutzverkleidung) laufen. Der Antrieb der Doppelrollenketten 32 erfolgt im gezeigten Beispiel über die am Auslaß des Halteabschnittes 24 angeordneten Umlenkrollen bzw. Kettenräder 53. Hierzu ist eine gemeinsame Antriebswelle 55 vorgesehen, die sich durch Getriebeeinheiten 56 erstreckt. Jede dieser Umlenkrollen (Kettenräder) 53 ist über Universalgelenke (Kardangelenke) 57 und eine Teleskopwelle 58 an eine solche Getriebeeinheit 56 angeschlossen. Dadurch ist der Antrieb der Umlenkrollen (Kettenräder) 53 unabhängig von der Hin- und Herbewegung der Transportvorrichtungseinheit 21.

Entsprechende Universal-Antriebsverbindungen sind auch für die Vorschubwalze 29 und die Reckwalze 30 vorzusehen, wenn man nicht überhaupt die Antriebsweinrichtungen für diese Walzen 29, 30 in die Transportvorrichtungseinheit 21 mit einbezieht.

Die kontinuierlich laufenden Vorschubeinrichtungen innerhalb der Transportvorrichtungseinheit 21, nämlich die Vorschubwalze 29, die Reckwalze 30 und die Doppelrollenketten 32 bewirken, daß die Kunststoffbahn in kontinuierlicher Durchlaufbewegung die Transportvorrichtungseinheit durchsetzt und
die bezüglich der Thermoformvorrichtung schrittweise Vorschubweise der Kunststoffbahn durch die eigene Hin- und
Herbewegung der Transportvorrichtungseinheit erzeugt wird.
Dies bedeutet, daß die Rückwärtsbewegung der Transportvorrichtungseinheit 21 zumindest auf den wesentlichen Teil des
Rückwärtsschubes mit gleicher Geschwindigkeit erfolgt, wie
die kontinuierliche Vorschubgeschwindigkeit des Materialbandes innerhalb der Transportvorrichtungseinheit. Dies läßt
sich mit den im Beispiel der Figur 4 vorgesehenen Zylinder-
Kolben-Anordnungen 25 in einfacher Weise derart erreichen,
daß diese Zylinder-Kolben-Anordnungen 25 nur für den Vorschub der Transportvorrichtungseinheit 21 benutzt werden.
Diese Vorschubbewegung kann etwa ein Sechstel bis zu einem
Viertel der für einen Arbeitstakt der Thermoformvorrichtung
verfügbaren Zeit beanspruchen. Wenn - wie oben erwähnt -
die Thermoformvorrichtung mit 30 Arbeitstakten pro Minute
arbeitet, ist die für einen Arbeitstakt verfügbare Zeit 2
Sekunden. Der Vorschub der Transportvorrichtungseinheit 21
aus der in Figur 4a gezeigten Stellung in die in Figur
4b gezeigten Stellung erfolgt dann innerhalb einer drittel
Sekunde bis halben Sekunde. Der Rücklauf der Transportvorrichtungseinheit 21 von der in Figur 4b gezeigten Stellung
in die in Figur 4a gezeigten Stellung erfolgt dann bei geschlossener Thermoformvorrichtung. Der Antrieb für diese
Rückwärtsbewegung kann durch die ständig angetriebenen
Doppelrollenketten 32 geschehen, die dann zusammen mit der
ganzen Transportvorrichtungseinheit 21 entlang der Ränder
der durch die Thermoformvorrichtung stationär gehaltenen
Kunststoffbahn zurücklaufen. Die Geschwindigkeit dieser Rücklaufbewegung ist dann zwangsläufig gleich der Geschwindigkeit des internen Vorschubs der Kunststoffbahn innerhalb
der Transportvorrichtungseinheit 21. Um die Randbereiche der
Kunststoffbahn nicht allzu große Kräfte übertragen zu lassen, kann die Zylinder-Kolben-Anordnung 25 auch für die Rückwärtsbewegung der Transportvorrichtungseinheit 21 mit Druckmittel beaufschlagt werden, wobei die Doppelketten dann im wesentlichen die Geschwindigkeitssteuerung für die Rücklaufbewegung der Transportvorrichtungseinheit 21 übernehmen.

Die gemäß Fig. 4a, 4b im Bahnlängen-Akkumulator gebildete Schlaufe kann bei empfindlichen Kunststoffbahnen, insbesondere bei relativ hoher Temperatur der Kunststoffbahn $B_1$ zu einer ungewollten Längsdehnung führen. Die in Fig. 11a, 11b gezeigte Abwandlung des Bahnlängen-Akkumulators verhindert diese Schlaufenbildung und die Gefahr einer ungewollten Längsdehnung. Bei dieser Ausbildung des Bahnlängenkompensators 27 ist zwischen der stationären Bahnführungswalze 28 und der am Eingang der Transportvorrichtungseinheit 21 angeordneten Bahnvorschubwalze 29 eine Mehrzahl von Führungswalzen 60, 61, 61, 63, 64, 65, 66 auf einem scherenförmig beweglichen Rahmenpaar 67 angebracht. Diese zusätzliche Führungswalzen 60 bis 66 können als Temperierwalzen ausgebildet sein, um die aus der Stabilisierungsvorrichtung kommende Materialbahn $B_1$ an ihren beiden Oberflächen für optimale Reckverhältnisse zu temperieren. Dieses Temperieren kann je nach Anwendungsfall und zu verarbeitendem Material ein zusätzliches Kühlen oder auch ein Wiederaufwärmen der Bandoberflächen beinhalten. Wie Fig. 11a, 11b zeigen, ist die mittlere zusätzliche Walze 63 in der Scherengelenkachse 68 des Rahmenpaares 67 gelagert. Dadurch wird die Summe der Umschlingungswinkel an den Walzen 28, 63 und 29 unabhängig von der Auszuglänge des scherenartigen Rahmenpaares 67, so daß auch an den Walzen 28 60, 61, 62, 63, 64, 65, 66, 29 ausgeübte Temperierwirkung von der Auszugstellung des scherenförmigen Rahmenpaares 67 unabhängig ist.

Im allgemeinen ist jedoch davon auszugehen, daß die Materialbahn $B_1$ bei Erreichen der stationären Führungswalze 28 bereits nahezu für den Reckvorgang thermisch konditioniert ist und die Walzen an dem scherenförmigen Rahmenpaar 67 nur noch geringe Einebnungs- und Erhaltungseinflüsse in Bezug auf die thermische Situation der Kunststoffbahn $B_1$ ausüben werden.

Aus den obigen Erläuterungen des Ausführungsbeispieles ist ersichtlich, daß der in den Bereich der Thermoformvorrichtung geführte Abschnitt der biaxial gereckten Kunststoffbahn $B_3$ gegenüber der Beendigung des biaxialen Reckvorganges immer nur zwischen 0,2 und 2,2 Sekunden Alterungszeit aufweisen wird. Da dieser innerhalb eines der Thermoformvorrichtung zugeführten Bahnabschnittes bestehende Alterungszeit-Unterschied im Hinblick auf die im Zusammenhang mit Figur 1 erläuterten Zusammenhänge durchaus merkliche Unterschiede in dem verbliebenen Reckeffekt bedingen können, sollte man entweder schmale, schnell laufende Thermoformwerkzeuge THo und THu benutzen, bei denen sowohl die Länge des Vorschubschrittes als auch die Taktzeit verkürzt wird. Man könnte auf diese Weise die Alterungsunterschiede innerhalb eines Bahnabschnittes beispielsweise auf eine halbe Sekunde vermindern. Andererseits ist aber die Arbeitsweise einer mit großflächigen Mehrfachwerkzeugen arbeitende Thermoformvorrichtung erheblich wirtschaftlicher als diejenige einer nur schmale Werkzeuge aufweisenden Thermoformvorrichtung. Im Rahmen der Erfindung wird deshalb vorgeschlagen, einen Abgleich der alterungsbedingten Relaxation innerhalb der Bahnabschnitte vorzunehmen. Hierzu bieten sich verschiedene Möglichkeiten. Man kann beispielsweise die den Querreckabschnitt 23 verlassende Kunststoffbahn $B_3$ in den Vorschubschritten der Thermoformvorrichtung entsprechenden Abschnitten variierter Oberflächentemperierung unterwerfen. Hierzu kann man die in Vorschubrichtung vorderen Bereiche solcher Bahnabschnitte an den Bahnoberflächen so abkühlen, daß der Verlust an Reckwirkung bzw. die Relaxation wesentlich abgebremst wird, während man in den in Vorschubrichtung hinteren Bereichen jedes Vorschubschrittes weniger behindert. Man kann auch durch Temperieren die Relaxation in den in Vorschubrichtung vorderen Bereichen der Bahnabschnitte unbehindert lassen, und in den in Vorschubrichtung hinteren Bereichen jedes Bahnabschnittes beschleunigen. Für beide Behandlungsweisen ist gemäß Fig. 4a, 4b am Ausgang des Querreckabschnit-tes 23 eine Oberflächen-Temperiereinrichtung 70 oberhalb und unterhalb der Kunststoffbahn angeordnet. Diese Oberflächen-Temperiervorrichtung besteht beispielsweise aus sich quer über die Transportvorrichtungseinheit 21 erstreckenden Rohren 71, in denen eine Reihe von auf die Oberfläche der Kunststoffbahn $B_3$ gerichteten Sprühdüsen 72 angeordnet ist. Diese Rohren 71 wird Temperiermedium, beispielsweise nebelförmig zu versprühendes Kühlwasser oder zum Aufwärmen der Kunststoffbahn $B_3$ zu benutzender Dampf über eine Mengenventilvorrichtung 73 zugeführt. Figur 16 zeigt die Möglichkeit der Zuführung von Kühlwasser mittels einer Pumpe 74 über die Mengenventilvorrichtung 73. Diese Mengenventilvorrichtung 73 ist an eine Steuervorrichtung 75 angeschlossen, um das Mengendosierventil innerhalb eines einem Vorschubschritt entsprechenden Bahnlängenabschnittes entweder von Schließstellung bis zu maximaler Öffnungsstellung oder umgekehrt zu steuern. Hierzu ist die Steuerungsvorrichtung 75 an die zentrale Maschinensteuerung 76 angeschlossen, mit der auch gemäß Pfeil 77 der Vorschub der Transportvorrichtungseinheit und der Arbeitstakt der Thermoformmaschine gesteuert werden.

Eine andere Möglichkeit ist aus Figur 17 ersichtlich. Hiernach enthält die Oberflächentemperiereinrichtung 70 sich oberhalb und unterhalb der Kunststoffbahn $B_3$ quer über die Transportvorrichtungseinheit erstreckende Aerosolverteilerschalen 78, die über die Mengendosierventilvorrichtung 73 an Aerosolerzeuger angeschlossen sind, beispielsweise Ultraschallvernebler 79. Die Steuerung der Dosierventilvorrich-tung 73 erfolgt wieder mit einer Steuerungsvorrichtung 75 von der zentralen Steuereinrichtung 76 her.

Sowohl das fein verteilte flüssige Kühlmedium, beispielsweise Wasser, als auch ein Aerosol aus verdampfungsfähigem Kühlmedium bewirken ein Kühlen der Oberflächen der Kunststoffbahn $B_3$ ohne diese zu befeuchten.

Figur 18 zeigt eine Anzahl von Steuerungsmöglichkeiten für die Mengenventilvorrichtung 73. In diesen Vorschlägen sind Steuerungsabläufe für das Mengendosierventil für die Taktzeitperioden $t_t$ wiedergegeben. Nach Vorschlag a ist das Mengendosierventil bei Beginn der Taktzeitperiode $t_t$ geschlossen und wird dann linear zunehmend geöffnet, bis es am Ende der Taktzeitperiode $t_t$ eine maximale Öffnung erreicht und dann wieder augenblicklich geschlossen wird. Eine solche Steuerungsweise wird sich für die Oberflächentemperiervorrichtung 70 empfehlen, wenn die Relaxation in den rückwärtigen Bereichen jedes einem Vorschubschritt entsprechenden Bandabschnittes beschleunigt werden soll und deshalb aufwärmendes Temperiermittel, beispielsweise Dampf oder Warmluft, auf die Oberflächen des Kunststoffbandes $B_3$ geführt wird. Eine ähnliche Behandlungsweise ist im Vorschlag b vorgesehen. Jedoch ist dort das Öffnen des Mengendosierventils zunächst schneller und wird gegen Ende der Taktzeitperiode $t_t$ verlangsamt. Auch der Vorschlag c geht von ähnlicher Temperierweise aus. Jedoch mit dem Unterschied, daß das Mengendosierventil zunächst relativ langsam geöffnet und gegen Ende der Taktzeitperiode $t_t$ schneller bis zur maximalen Öffnungsweite geöffnet wird.

Der Vorschlag d ist die Umkehrung des Vorschlages a. Hiernach wird das Mengendosierventil bei Beginn der Taktzeitperiode $t_t$ augenblicklich bis zur maximalen Öffnungsweite geöffnet und dann im wesentlichen linear abnehmend geschlossen, so daß es bei Ende der Taktzeitperiode $t_t$ seine Schließstellung erreicht. Dieser Vorschlag eignet sich insbesondere für den Fall, daß die Relaxation in den in Vorschubrichtung vorderen Bereichen der Kunststoffbahn $B_3$

durch Kühlen der Bahnoberflächen wesentlich herabgesetzt wird, während in den rückwärtigen Bereichen der Bahnabschnitte die Relaxation möglichst ungehindert ablaufen soll. Die in den Vorschlägen b und c enthaltenen Abwandlungen können sinngemäß auch bei dem gemäß Vorschlag d vorgesehenen Schließen des Mengendosierventils angewandt werden. Wenn man mehrere Düsenreihen oberhalb und unterhalb der Kunststoffbahn am Ausgang des Querreckabschnittes 23 anordnet, kann man auch beide Steuerungsvorschläge miteinander vereinigen, indem man eine Düsenreihe mit aufwärmendem Temperiermedium beschickt und das entsprechende Mengendosierventil gemäß Vorschlag a steuert, während die andere Düsenreihe mit kühlendem Temperiermedium beschickt und das entsprechende Mengendosierventil entsprechend Vorschlag d gesteuert wird.

Falls durch die Oberflächentemperierung Verhältnisse an der Kunststoffbahn $B_3$ eingestellt werden, die für den Ablauf des Thermoformvorganges nachteilig sind, kann noch ein Nachtemperieren vorgenommen werden. Hierzu ist oberhalb und unterhalb der Kunststoffbahn $B_3$ je eine zusätzliche Nachtemperiervorrichtung 80 vorgesehen. Diese Nachtemperiervorrichtung 80 kann je mindestens eine Düsenreihe oberhalb und unterhalb der Kunststoffbahn $B_3$ angeordnete Düsenreihe enthalten. Diese Düsenreihe erstreckt sich quer über den Einlaß der Thermoformvorrichtung. Sie kann direkt an der Eingangsstirnseite des oberen Thermoformwerkzeugs THo und des unteren Thermoformwerkzeuges THu angebracht sein. Der grundsätzliche Aufbau dieser zusätzlichen Nachtemperiereinrichtung 80 kann der gleiche sein, wie er oben in Verbindung mit den Figuren 16 und 17 beschrieben ist. Jedoch wird die Steuerung des Mengendosierventils für diese zusätzliche Nachtemperiereinrichtung 80 etwa nach den Vorschlägen e bzw. f zu erfolgen haben. Hiernach ist das Mengendosierventil der zusätzlichen Nachtemperiereinrichtung 80 nur während der Vorschubzeit $t_V$ geöffnet, also während derjenigen Zeit, in welcher die für das Thermoformen fertig vorbereitete Material-

bahn $B_4$ in einem Vorschubschritt zwischen die Thermoformwerkzeuge THo und THu eingeschoben wird. Man kann während dieser Vorschubzeit aufwärmendes Temperiermedium auf die Oberflächen der in die Thermoformvorrichtung einlaufenden Kunststoffbahn $B_4$, und zwar in solcher zeitlich gesteuerter Menge, daß die Oberflächentemperatur der Kunststoffbahn innerhalb eines einem Vorschubschritt entsprechenden Abschnittes gleichmäßig gemacht wird.

Bei der obigen Beschreibung eines Ausführungsbeispieles wird von Polystyrol als zu verarbeitender thermoplastischer Kunststoff ausgegangen, weil dieser Kunststoff derzeit noch das gebräuchlichste Material für die Herstellung dünnwandiger Kunststoffartikel durch Thermoformen darstellt. Bei Polystyrol steigt je nach der Temperatur innerhalb der das biaxiale Recken ausgeführt wird, der Elastizitätsmodul etwa um ein Drittel, die Reißfestigkeit um das Dreifache. Auch die Dehnungsfähigkeit wird etwas erhöht. Durch biaxiales Recken wird Polystyrol auch widerstandsfähiger gegen fetthaltige Füllgüter. Bei der Verarbeitung von transparentem Polystyrol erhalten die Artikel durch das vorherige biaxiale Recken der Polystyrolbahn sowohl bei sehr dünner als auch bei dickerer Wandausführung beste glasklare Transparenz. Allerdings ist die Relaxation bei Polystyrol besonders erheblich.

Das durch die Erfindung wesentlich verbesserte Herstellen von Formlingen durch Thermoformen nach vorherigem biaxialem Recken hat aber auch bei praktisch allen übrigen, für Thermoformen in Betracht kommenden Kunststoffen, beispielsweise Polyester, Polyolefinen, insbesondere Polypropylen u. dgl. erhebliche Bedeutung, weil auch bei solchen Kunststoffen erhebliche Qualitätsverbesserungen durch das vor dem Thermoformen durchgeführte biaxiale Recken erzielbar sind. Insgesamt sind somit durch die Erfindung erhebliche Vorteile erzielbar:

1) die Reckvorrichtung (im beschriebenen Beispiel gleichzeitig Transport- und Haltesystem für die Kunststoffbahn) ist eine geschlossene Einheit und läuft kontinuierlich immer mit gleichbleibender innerer Geschwindigkeit, so daß für das Recken ebenso wie für das schrittweise Arbeiten der Thermoformvorrichtung Gleichmäßigkeit in Bezug auf thermische wie mechanische Behandlung garantiert ist.

2) Mit der erfindungsgemäßen Vorrichtung wird die Alterungszeit der Kunststoffbahn zwischen Beendigung des Reckvorganges und nachfolgendem Thermoformen auf ein Minimum herabgesetzt.

3) Während man bei Großanlagen zur Herstellung von Filmen - d.h. Folien bis 0,5 mm Dicke - den Folienstrang (200 x9) sehr gleichmäßig temperiert, d.h. sehr lange Kühl- und Raststrecken braucht, um ein weitestgehend ebenes Temperaturprofil zu erhalten, wird erfindungsgemäß eher ein Temperaturprofil nach Figur 3 bevorzugt. Dies bedeutet, daß nur die Außenhäute in den Bereich der Recktemperatur abgekühlt werden, was sich wohl bis nach erfolgter Thermoverformung etwas vergleichmäßigt. Für die Nutzanwendung für tiefgezogene Teile, die vornehmlich auf Biegung beansprucht werden, ist es nun wesentlich, daß die Außenhäute die erhöhte Festigkeit, den erhöhten Elastizitätsmodul haben. Dies hat zum Vorteil, daß die gegenüber normalem Tiefziehen von Thermoplasten bedeutend höheren Kräfte (Formkräfte) reduziert werden. Naturgemäß bezieht sich dies auch auf den gesamten biaxialen Reckvorgang.

4) Ein wesentlicher Vorteil des vor dem Thermoformen vorzunehmenden biaxialen Reckens liegt in der Wirtschaftlichkeit, da man vom Rohmaterialgewicht für den gleichen Formling etwa 10% bis 15% einsparen kann.

Das gemäß der Erfindung wesentlich verbesserte Thermoformen nach vorherigem biaxialen Recken bietet sich besonders für die Verarbeitung von Laminaten an, Beispielsweise dreischichtigen oder fünfschichtigen Kunststoffbahnen, in deren Kern sich Materialien mit höheren Sperreigenschaften gegen Wasserdampf, Sauerstoff usw. befinden. Da in dem Folienstrang (200 x 9) die Gleichmäßigkeit der Mehrschichtfolien (gleichmäßige Dicken) genauer zu kontrollieren ist, überträgt sich. durch das biaxiale Recken diese Genauigkeit auch auf das Vorprodukt der zu verformenden Kunststoffbahn.

Das Stabilisieren der extrudierten Kunststoffbahn und das Vortemperieren für das biaxiale Recken kann bei Vorrichtungen mit hoher Durchsatzleistung, beispielsweise Vorrichtungen mit Durchsatzleistungen zwischen 250 und 700 kg in Wasserkühlbädern durchgeführt werden. Es bedarf dann nur einer billigen Raststrecke (Temperierstrecke), innerhalb welcher die Wärme des inneren Kernes des Stranges nach außen dringt, so daß die Oberflächentemperatur beim Einlaufen der Kunststoffbahn $B_1$ in den Bahnlängen-Akkumulator 27 im Bereich der Recktemperatur liegt. Innerhalb der Wasserkühlstrecke hat man die Möglichkeit, die Intensität des Kühleffektes durch die Wassertemperatur und die Bewegungsgeschwindigkeit zu regeln. Da Kunststoffe im allgemeinen schlechte Wärmeleiter sind, bildet sich an der Oberfiäche der Kunststoffbahn innerhalb der Wasserkühlstrecke sehr schnell eine Temperatur unterhalb 100°C aus, so daß kein wesentliches Verdampfen des Kühlwassers eintritt, selbst bei Kunststoffen mit extrem hohen Verarbeitungs-Temperaturbereichen.

0056245

Erika Thiel
Uferstraße 15
6500 Mainz

Vorrichtung zum Recken einer Materialbahn in kontinuierlichem Durchlauf und schrittweisen Übergeben an eine Behandlungsvorrichtung

P a t e n t a n s p r ü c h e
==========================================

1) Vorrichtung zum Recken einer Materialbahn ($B_0 - B_4$) in kontinuierlichem Durchlauf und schrittweisen Übergeben der unter Zugspannung in Längsrichtung bzw. oder Querrichtung zu haltenden gereckten Materialbahn ($B_4$) an eine Behandlungsvorrichtung, beispielsweise zur Herstellung dünnwandiger Formlinge aus einer kontinuierlich in einer Extrudiervorrichtung (E) erzeugten thermoplastischen Kunststoffbahn ($B_0$ bis $B_5$), die nach dem Recken schrittweise in eine Thermoformvorrichtung (TH) einzuführen ist, wobei eine Umsetzvorrichtung von kontinuierlichem Bahntransport auf schrittweisen Bahntransport und ein Vorschubkompensator vorgesehen sind, dadurch gekennzeichnet, daß

a) die Umsetzvorrichtung (20) eine als Vorrichtung zum Recken der Materialbahn ($B_1$) unter kontinuierlichem Vorschub in Transportrichtung und Halten der gereckten Materialbahn ($B_3$) unter Zugspannung ausgebildete Transportvorrichtungseinheit (21) enthält;

b) Einrichtungen (25) zum Erzeugen einer Hin- und Herbewegung dieser Transportvorrichtungseinheit (21) in Transportrichtung vorgesehen sind, bei denen der Rückwärtsabschnitt der Hin- und Herbewegung zumindest auf den wesentlichen Teil seiner Länge mit seiner Geschwindigkeit derjenigen des kontinuierlichen Bahnvorschubes im Inneren der Transportvorrichtungseinheit (21) angeglichen ist;

c) derjenige Teil des Rückwärtsabschnitts der Hin- und Herbewegung, in welchem gleichmäßige Bewegung der Transportvorrichtungseinheit (21) mit gleicher Geschwindigkeit wie die Vorschubgeschwindigkeit herrscht, im wesentlichen ebenso lang wie ein Arbeitsschritt (26) der Behandlungsvorrichtung (TH) ist; und

d) der Vorschubkompensator in Art eines Bahnlängen-Akkumulators (27) ausgebildet und in Wanderrichtung der Materialbahn ($B_1$) vor dem Einlaß in die Transportvorrichtungseinheit (21) angeordnet ist.

2) Vorrichtung nach Anspruch 1, dadurch gekennzeichnet, daß sich die hin und her bewegte Transportvorrichtungseinheit (21) durch den Bereich der ortsfesten, schrittweise arbeitenden Behandlungsvorrichtung (TH) erstreckt.

3) Vorrichtung nach Anspruch 1 oder 2, dadurch gekennzeichnet, daß die Transportvorrichtungseinheit (21) für Aufrechterhaltung einer Längsspannung und einer Querspannung in der Materialbahn ($B_3$) seitliche, kontinuierlich umlaufende Transportketten (32) mit Halteelementen (35) für die seitlichen Randbereiche der Materialbahn ($B_3$) enthält.

4) Vorrichtung nach einem der Ansprüche 1 bis 3, dadurch gekennzeichnet, daß die Transportvorrichtungseinheit (21) als Vorrichtung zum biaxialen Recken der Materialbahn ($B_1$) in ihrem Einlaßbereich mit einem mit unterschiedlich schnell angetriebenen Vorschubwalzen (29, 30) ausgestatteten Längsreckabschnitt (22), einen sich daran anschließenden mit einem Paar von sich seitlich voneinander entfernenden Transportketten (32) ausgestatteten Querreckabschnitt (23) und einem sich durch den Bereich der Behandlungsvorrichtung bzw. Thermoformvorrichtung (TH) erstreckenden Halteabschnitt (24) ausgebildet ist, der parallel angeordnete, seitliche Transportketten (32) aufweist.

5) Vorrichtung nach einem der Ansprüche 1 bis 4, dadurch gekennzeichnet, daß bei Ausstattung der Transportvorrichtungseinheit (21) mit einem Querreckabschnitt (23) und einem sich daran anschließenden Halteabschnitt (24) die seitlichen Transporteinrichtungen, insbesondere Transportketten (32) der Transportvorrichtungseinheit (21) über diese beiden Abschnitte (23, 24) ununterbrochen durchgehend erstreckt sind.

6) Vorrichtung nach einem der Ansprüche 1 bis 5, dadurch gekennzeichnet, daß im Bereich der Transportvorrichtungseinheit (21), und zwar in Wanderrichtung der Materialbahn (B$_3$) hinter der Reckvorrichtung (22, 23) mindestens eine auf die Oberflächen der Materialbahn (B$_3$) gerichtete Oberflächen-Temperiereinrichtung (70, 80) vorgesehen ist.

7) Vorrichtung nach Anspruch 6, dadurch gekennzeichnet, daß mindestens eine Oberflächen-Temperiereinrichtung (70) an der Transportvorrichtungseinheit (21) angebracht ist.

8) Vorrichtung nach Anspruch 4, und 7, dadurch gekennzeichnet, daß eine Oberflächen-Temperiereinrichtung (70) am Übergang zwischen dem Querreckabschnitt (23) und dem Halteabschnitt (24) der Transportvorrichtungseinheit (21) angebracht ist.

9) Vorrichtung nach Anspruch 6, dadurch gekennzeichnet, daß eine Oberflächen-Temperiereinrichtung (80) am Einlaß der stationären Behandlungsvorrichtung (TH) angebracht ist.

10) Vorrichtung nach einem der Ansprüche 6 bis 9, dadurch gekennzeichnet, daß die Oberflächen-Temperiereinrichtung (70, 80) mindestens eine oberhalb und bzw. oder unterhalb der Führungsebene für die Materialbahn (B$_3$) angeordnete und sich quer zur Wanderrichtung der Materialbahn (B$_3$) über die gesamte Breite der Transportvorrichtungseinheit (21) erstreckende Reihe von auf die jeweilige Oberfläche des Materialbandes gerichteten Strahldüsen (72) für fließfähiges Temperiermedium enthält.

11) Vorrichtung nach Anspruch 10, dadurch gekennzeichnet,
daß für dampf- oder gasförmige Temperiermedien eingerichtete Strahldüsen (72) vorgesehen sind.

12) Vorrichtung nach Anspruch 10 oder 11, dadurch gekennzeichnet, daß für unter Druck zuzuführende flüssige Temperiermedien, beispielsweise Wasser, eingerichtete Sprüh- und
Zerstäuberdüsen (72) als Strahldüsen vorgesehen sind.

13) Vorrichtung nach einem der Ansprüche 10 bis 12, dadurch
gekennzeichnet, daß mindestens ein Aerosolerzeuger, beispielsweise Ultraschallvernebler (79), und Aerosolverteilerdüsen (78) als Strahldüsen vorgesehen sind.

14) Vorrichtung nach einem der Ansprüche 6 bis 13, dadurch
gekennzeichnet, daß die Zufuhr für das Temperiermedium
über mindestens eine zeitlich gesteuerte Mengenventilanordnung (73) geführt ist.

15) Vorrichtung nach Anspruch 14, dadurch gekennzeichnet,
daß eine Mengenventilanordnung mit zeitlicher Steuerung
entsprechend dem Takt ($t_t$) des schrittweisen Vorschubs
mit während eines Vorschubschrittes ausgehend von Schließstellung bis zu einer gewünschten, vorzugsweise einstellbaren Maximalmenge zunehmender Zufuhr von Temperiermedium zu der bzw. den angeschlossenen Oberflächen-Temperiereinrichtungen (70, 80) vorgesehen ist.

16) Vorrichtung nach Anspruch 14, dadurch gekennzeichnet, daß
eine Mengenventilanordnung (73) mit zeitlicher Steuerung
entsprechend dem Takt ($t_t$) des schrittweisen Vorschubs
mit während eines Vorschubschrittes ausgehend von einer

0056245

gewünschten, vorzugsweise einstellbaren Maximalmenge
bis zur Schließstellung abnehmender Zufuhr von Temperiermedium zu der bzw. den angeschlossenen Oberflächen-Temperiereinrichtungen (70, 80) vorgesehen ist.

17) Vorrichtung nach einem der Ansprüche 1 bis 16, dadurch gekennzeichnet, daß der Bahnlängen-Akkumulator (27) ein ortsfestes Bahnführungselement, vorzugsweise Bahnführungswalze (28) und ein am Einlaß der hin und her bewegten Transportvorrichtungseinheit (21) angebrachtes Bahnführungselement, vorzugsweise Bahnvorschubwalze (29) aufweist.

18) Vorrichtung nach Anspruch 17, dadurch gekennzeichnet, daß zwischen dem ortsfesten Bahnführungselement (28) und dem Einlaß der hin und her bewegten Transportvorrichtungseinheit (21) angebrachten Bahnführungselement (29) eine Mehrzahl weiterer Bahnführungselemente (60 bis 66) auf schlaufenförmig zusammenschiebbaren und austreckbaren Trägerelementen (67) angebracht ist.

19) Vorrichtung nach Anspruch 18, dadurch gekennzeichnet, daß die Trägerelemente als ein Paar von im wesentlichen mittig scherenartig gelenkig miteinander verbundenen Trägerrahmen (67) ausgebildet sind, wobei eine Bahnführungswalze (63) in der Scherengelenkachse (68) angeordnet sein kann.

20) Vorrichtung nach einem der Ansprüche 3 bis 5, dadurch gekennzeichnet, daß die Transportketten (32) als in Führungsschienen (33, 34) laufende Doppelrollenketten ausgebildet sind, die auf einer Seite die Halteelemente (35) für die Ränder der Materialbahn ($B_2$, $B_3$, $B_4$, $B_5$) tragen.

21) Vorrichtung nach Anspruch 20, dadurch gekennzeichnet, daß die Transportvorrichtungseinheit (21) mit Einrich-

0056245

tungen (46) zur Übergabe und zum Festlegen der Materialbahnränder an die bzw. den Halteelementen (35) versehen
ist und an ihrem Auslaß Einrichtungen (51) zum Abheben
der Materialbahnränder von den Halteelementen (35) aufweist.

22) Vorrichtung nach einem der Ansprüche 3 bis 5, dadurch
gekennzeichnet, daß die Halteelemente (35) als Halte-
Spitzdorne (35a) ausgebildet sind.

23) Vorrichtung nach einem der Ansprüche 3 bis 5, dadurch
gekennzeichnet, daß die Halteelemente (35) als pikenartige Dorne (35b) ausgebildet sind.

24) Vorrichtung nach einem der Ansprüche 3 bis 5, dadurch
gekennzeichnet, daß die Halteelemente (35) als Klemmhalteelemente (35c) mit sich nach oben im wesentlichen V-
förmig erweiternder und oben offener Aufnahmeöffnung
(35d) ausgebildet sind.

25) Vorrichtung nach Anspruch 24, dadurch gekennzeichnet,
daß die Klemmhalteelemente (35c) plattenartig flach und
in einer in Wanderrichtung der Transportkette (32) liegenden Fläche angeordnet sind.

0056245

Erika Thiel
Uferstraße 15
6500 Mainz

Vorrichtung zum Recken einer Materialbahn in kontinuierlichem Durchlauf und schrittweisen Übergeben an eine Behandlungsvorrichtung

Liste der benutzten Bezugszeichen
=====================================

| | |
|---|---|
| To | Extrudiertemperatur |
| $T_1$, $T_2$, $T_3$ | diverse mögliche Reck- und Behandlungstemperaturen |
| $t_1$, $t_2$... | verschiedene Zeiten nach Beendigung des Reckvorganges |
| $Ro_1$, $Ro_2$... | verschiedene Ausgangs-Reckwirkung |
| $R_1$, $R_2$.... | verschiedene verbliebene Reckwirkung |
| $B_o$, $B_1$.... | Materialbahn in verschiedenen Reck- und Behandlungsstadien |
| E | Extruder |
| S | Stabilisierungsvorrichtung |
| LR | Längsreckvorrichtung |
| QR | Querreckvorrichtung |
| TE | Temperiereinrichtung |
| TH | Thermoformvorrichtung |
| THo | oberes Thermoformwerkzeug |
| THu | unteres Thermoformwerkzeug |
| $t_t$ | Taktzeitperiode |
| $t_v$ | Vorschubzeit |
| 20 | Reck- und Vorschubumsetzvorrichtung |
| 21 | Transportvorrichtungseinheit |
| 22 | Längsreckabschnitt |
| 23 | Querreckabschnitt |
| 24 | Halteabschnitt |
| 25 | Bewegungseinrichtung |
| 26 | Arbeitshub |

- 2 -

| | |
|---|---|
| 27 | Bahnlängen-Akkumulator |
| 28 | Bahnführungswalze |
| 29 | Bahnvorschubwalze |
| 30 | Streckwalze |
| 31 | Umlenkwalze |
| 32 | Rollenkette |
| 33, 34 | Führungsschienen für 32 |
| 35, 35a, 35b, 35c | Halteelemente in diverser Ausführung |
| 35d | V-förmige Ausnehmung in 35c |
| 36 | oberes Führungsleistenpaar |
| 37 | obere Rollen von 32 |
| 38, 39 | Verbindungsglieder von 32 |
| 40 | unteres Führungsleistenpaar |
| 41 | untere Rollen von 32 |
| 42, 43 | Verbindungsglieder von 32 |
| 44 | Schrauben von 33, 34 |
| 45 | Rahmen |
| 46, 46a, 46b | Übergabe- und Aufsetzrollen div. Ausführung |
| 47 | weicher Ring auf 46a |
| 48 | Nabenteil |
| 49 | Rille im Umfang von 46a |
| 50 | Eindrückrippen auf dem Umfang von 46b |
| 51 | keilförmige Rampe |
| 52, 53 | Umlenkrollen |
| 54 | Führungsstück |
| 55 | Antriebswelle |
| 56 | Getriebeeinheit |
| 57 | Universalgelenke (Kardangelenk) |
| 58 | Teleskopwelle |
| 60 bis 66 | Führungswalzen |
| 67 | Rahmenpaar |
| 68 | Scherengelenkachse |
| 70 | Oberflächen-Temperiereinrichtung an 21 |

0056245

- 3 -

| 71 | Rohre in 70 |
| 72 | Sprühdüsen in 70 |
| 73 | Mengenventilvorrichtung |
| 74 | Rampe in 70 |
| 75 | Steuervorrichtung für 70 |
| 76 | Maschinensteuerung |
| 77 | (Pfeil) Maschinen-Vorschubsteuerung |
| 78 | Aerosol-Verteilerschale |
| 79 | Ultraschall-Vernebler |
| 80 | Oberflächen-Temperiereinrichtung an TH |

*Fig. 1*

*Fig. 2*

*Fig. 3a*

EXTRUDIEREN U. STABILISIEREN

*Fig. 3b*

RECKEN

Fig. 4a

Fig. 4b

Fig. 5

0056245
4/7

**Fig. 6**

**Fig. 7**

**Fig. 8**

**Fig. 9**

**Fig. 10**

## _Fig._ 11 a

## _Fig._ 11 b

**Fig. 12**

48 47 B2 49 47
49
46a
35a
32 33

**Fig. 13**

50 46b B2 35d
35c
33 32

**Fig. 14**

35a B5 51
34
32

**Fig. 15**

35d B5 51 35c
34
32

**Fig. 16**

**Fig. 17**

**Fig. 18**